# EUROPEAN PATENT APPLICATION

(11) **EP 1 898 350 A2**
(43) Date of publication of application: **12.03.2008**
(21) Application number: 06725823.6
(22) Date of filing: 16.03.2006
(51) Int. Cl.: G06Q 30/00

(54) **ELECTRONIC SYSTEM FOR COMPILING INFORMATION ON CHARACTERISTICS RELATING TO THE READING OF PRINT MEDIA AND PORTABLE READ UNIT FOR SAID SYSTEM**

(30) Priority: 17.03.2005 ES 200500626
(71) Applicant: Cuende Infometrics S.A., 28046 Madrid (ES)
(72) Inventor: CUENDE ALONSO, Daniel, E-28230 Las Rozas, Madrid (ES)
(74) Representative: Ungria Lopez, Javier
(86) International application number: PCT/ES2006/000134
(87) International publication number: WO 2006/097563

(57) **Abstract**

The invention relates to an electronic system for compiling information on characteristics relating to the reading of print media. The inventive system comprises: a central data processing unit (1) with a first file (2a) that contains admissible identification codes (2a') for print media (3) which are identified by electronically readable codes (5) and a second file (2b) for storing data which relate to performed identification operations (2b') and which are assigned to the identified admissible identification (2a'); and a plurality of local units (4) including (i) identifying means (4a) which comprise an electronic read device that is used to identify the print media (3) on the basis of said electronically readable codes , (ii) a local register unit (8) in which the first local registers local registers (8a) of the performed identification operations (2b'), and (iii) data transmission means (6) for transmitting data relating to performed identifications operations (2b') to the central data processing unit (1).

## Description

### TECHNICAL FIELD OF THE INVENTION

The present invention belongs to the technical field of electronic systems used to compile information on the characteristics of communication media, and more particularly, of the characteristics of print media, such as newspapers, magazines, catalogues, advertising brochures and similar materials.

### STATE OF THE PREVIOUS ART

Nowadays it is a common practice to compile information regarding the characteristics of the kind of access the public has had to the media, since it provides data about the type of public that is interested in certain subjects, the time of interest or prime time, the customs of the public, etc. The treatment of such information serves to determine, for instance, which are the most effective days and times of the day to issue advertising messages as a function of the type of public that is receiving them, of the evaluation of the contents and the corresponding fees.

In electronic media such as television, said compilation of information is done by measuring audience attention based on the selection of a group of persons that receive electronic devices connected to their television receptor and register automatically the turning on and off of the television, when the channel is changed, etc.

The most advanced media to date in terms of audimetry, is television, where, through a panel of individuals, that is through a constant sample, a sophisticated device (the "audiometer"), installed in the television receptor of the home selected, registers what the person is watching. This method requires the person selected to identify him or herself every time they sit in front of the television set by means of remote control. Once they have identified themselves, every time they change channels or turn off their television set are actions that are recorded, and every night the "Audimeter" sends the information recorded to a central data process center. This audience information is very consistent and allows measuring the television consumption in real time, and therefore it also allows the process to work effectively. In this manner, the characteristics of the audience can be evaluated in real time and the fees for the advertising messages, the success of a program or of a content, and even the degree of acceptance of the various advertising messages can be established very quickly.

However, this system is not free of disadvantages, since, for instance, it cannot measure the amount of TV the person selected consumes outside his or her home, such as when watching a soccer match in a bar, or during a trip in a hotel. In any case, this type of panelized measuring is always more reliable and representative to measure watcher's behavior than interviews.

In print media such as magazines, newspapers, books, catalogues, brochures, etc., "audience measuring" is more complex of a process, since once said printed media have been distributed it is hard to trace their whereabouts and which public they reach. Conventionally, the audience measuring system is in this case based on interviews and questionnaires in which selected persons are interviewed about which media(s) they have read in the last week and with which frequency. Said interviews are done periodically because once the answers are obtained they have to be entered in the appropriate data bases and be evaluated. Oftentimes said interviews are conducted quarterly (this interviewing activity frequency is also called the quarterly "wave") and that during the evaluation of the data obtained the information accumulated in the three previous waves of interviews is also included. This makes the information obtained a mere indicator of the weekly average readership of each media. It also has the disadvantage that the data evaluated are based on the memory of and the assumption that the information given by the interviewee is accurate. Also, obtaining information in this manner is a costly process because it entails hiring interviewers and entering the data obtained in computer systems to be evaluated later.

### DESCRIPTION OF THE INVENTION

The object of the present invention is to overcome the disadvantages presented by the conventional print media audience measuring systems and to contribute new advantages by means of an electronic system for compiling information on characteristics relating to the reading of print media that comprises a central data processing unit, that comprises data processing means, a database that comprises at the least, a first file that contains the admissible identification codes of print media, each identified by an electronically readable code, such as for instance a bar code, or a radiofrequency tag, and a second file where the identification data obtained by the data receptor means is stored to be assigned an admissible identification code; and a plurality of local units each provided with identifying means to electronically identify the print media based on their electronically readable codes, and also provided with data transmission means associated to the identifying means to be able to transmit the identification data obtained to the data receptor means located in the central processing unit, in which system
each admissible identification code contained in the first file is associated to the electronically readable code of a print media;
the processing means comprise the first verifying means to verify if the data from the identifications obtained correspond to an admissible identification code contained in the first file.

The identifying means comprise an electronic reading device of the electronically readable code, individually assigned to a potential reader, and the electronic read device having been selected, for instance, amongst bar code reading devices and radiofrequency tag reading devices;
the local unit comprises, in addition to a local recording unit in which the first local records of the identification data obtained by the identifying means are, at least temporally, stored;
the data transmission means transmit, when they are connected to the data reception means, the first local records to the remote data processing unit.

In a preferred embodiment of the invention, each local recording unit contains, in addition, an individual admissible identification key, and the database comprises also a key register that contains in turn an identification key admissible for each of the local units, while the central data processing unit comprises also first verification means to verify in the key register whether an identification key received through the data reception means does indeed correspond to an admissible identification key. The central data processing unit comprises, in addition, routing means to transmit, whenever the verification means detect and admissible identification key, the first local records with the data of the identifications obtained thus far, and received together with an admissible identification key, to the assigning means.

The database may also comprise, in addition, a third file that contains admissible actions data that may be performed by the potential reader, a fourth file to store data of completed or performed actions, as well as second verification means that verify in the third file whether the data pertaining to performed actions received by the data reception means correspond to admissible actions data, and in that case, they transmit the data of performed actions to the assigning means. In this case, the assigning means assign the data of the done actions to the data of the processed identifications, and to the admissible identification key received together with said data, and store the done action data with the admissible identification codes together with said admissible identification key in the fourth file. In order to be able to select between said admissible actions, at least one of the local units may be provided with selection means associated to the identifying means that can also be independently operated in order to carry out admissible actions regarding each of the print media identified by the identifying means, and of file means to store data obtained from done actions in a second local record. In this manner, the local record unit keeps at least temporally, each of the second local records with the data of the actions done in regard to each identified print media, and the data transmission means transmit, when connected to the data reception means, the first local records and the second local records to the remote data processing unit.

The local register unit may be also equipped, in addition, with a third register that contains a plurality of actions available for each print media identified by the identifying means, while the selecting means are designed to allow the potential reader to select, at the least, one available action in regards to each print media identify by the identifying means. In this case, the assigning means may also be designed to associate each admissible identification key to the data that each performed action register, and to the data of each of the completed identifications. The available actions established in the third register may be, for instance, a purchasing action, a reading action, a transferring to a third party action, issuing an opinion actions, establishing the beginning and end of the act of reading, and/or a disposing of action of the print media identified by the identifying means.

The present invention also refers to an individual electronic portable unit that may be used in the system described above. Said portable electronic unit comprises, preferably, a casing or body that houses the identifying means, the transmitter means, the local recording unit, and its own power source. Preferably, this unit is equipped with a turn on button that can be actuated by the potential reader to activate the identifying means.

When said portable electronic unit is equipped with selection means as those described above, it is also, and preferably, equipped with a control logic mechanism that activates the selecting means when the identifying means have created a first local data record of a print media completed identification. These selection means may comprise, at the least, a multifunction selector button that the potential reader may activate to select an action from the plurality of actions available, and alternatively, may comprise an independent selector button that can be action by the potential reader to select an available action. When there are several independent selector buttons, there may exist, for instance, a first button that serves to activate only the identifying means, and a second button that, in addition to activating the identifying means also automatically selects one of the available actions.

The selection means of the electronic unit may be designed in such a manner that the actions that can be accessed may be related to the admissible identification code that corresponds to the identification completed, and thus, for instance, the action of detecting the admissible identification code of a first print media, such as a book or a magazine, may lead to accessing one or more actions of a first given type, while detecting the admissible identification code of another print media, such as another book or another magazine may lead to accessing one or more actions of a different type.

Preferably, the local register unit also comprises an internal clock, so that when the identifying means read an admissible identification code in a printed media, the local register unit assigns a date and a time to said register that will go to the performed identification data actions completed in the first local register.

In addition to the elements described above, the local register unit may also comprise a fifth local register containing the dates and times the identifying means have been activated but that have not resulted in identifications. This fifth local register, which records may also be transmitted to the central data processing unit, since the this data will help in the evaluation of whether the potential reader has really used the local unit appropriately.

The simplicity of the portable electronic unit makes possible that it may be manufactured in a very small size, such as that of a remote control device such as those used to open garage doors, so the potential reader may carry it comfortably, which in turns enhances the actual use of the unit and therefore increases the reliability of the data collection process.

### BRIEF DESCRIPTION OF THE FIGURES

This section contains descriptions of the embodiments of the invention that refer to the figures listed below.
Figure 1 is a block diagram of the system object of the present invention according to the first embodiment.
Figure 2 is a schematic view of a printed media that has a conventional bar code identification.
Figure 3 is a schematic view of a print media that has a conventional radiofrequency tag identification.
Figure 4 is a schematic view of a lateral view of a local unit represented as a portable electronic unit according to a first embodiment of the invention.
Figure 5 is a schematic view of a lateral view of a local unit represented as a portable electronic unit according to a second embodiment of the invention.
Figure 6 is a schematic view of the lower plan view of the local units shown in Figures 4 and 5.
Figure 7 is a block diagram of a local unit object of the invention according to a second embodiment.
Figure 8 is a block diagram of a central data processing unit object of the invention according to a second embodiment.
Figure 9 is a diagram that shows the basic operation of the system shown in Figure 1.
Figure 10 is a diagram that shows the basic operation of the local unit shown in Figure 5.
Figure 11 is a diagram that shows the basic operation of the local unit shown in Figure 7.
Figure 12 is a diagram that shows the basic operation of the central data processing unit shown in Figure 1.
Figure 13 is a diagram that shows the basic operation of the central data processing unit shown in Figure 8.

The key below identifies the numerical references that accompany said figures refer to the following parts or components of the system:
- 1: central data processing unit
- 1a: data reception means
- 1b: data processing means
- 1c: assigning means
- 1d: second verification means
- 1e: routing means
- 1f: third verification means
- 1g: first verification means
- 2: database
- 2a: first file
- 2a': admissible identification code
- 2b: second file
- 2b': performed identifications data
- 2c: key register
- 2c': admissible identification key
- 2d: discarded data file
- 2e: third file
- 2e': admissible actions data
- 2f: fourth file
- 2f': completed actions data
- 3: print media
- 4: portable electronic local unit
- 4a: identifying means
- 4b: file means
- 5: electronically legible code
- 5a: bar code
- 5b: radiofrequency tag
- 6: data transmission means
- 7: reading device
- 7a: bar code reading device
- 7b: radiofrequency tag reading device
- 8: local register unit
- 8a: first local register
- 8b: second local register
- 8c: third local register
- 8c': available actions
- 8d: microprocessor
- 9: selection means
- 10: control logic means
- 11: individual portable electronic unit
- 11a: body
- 12: own power source
- 13: on button
- 14: multifunction selector button
- 15: independent selector button
- 16: internal clock

### EMBODIMENT OF THE INVENTION

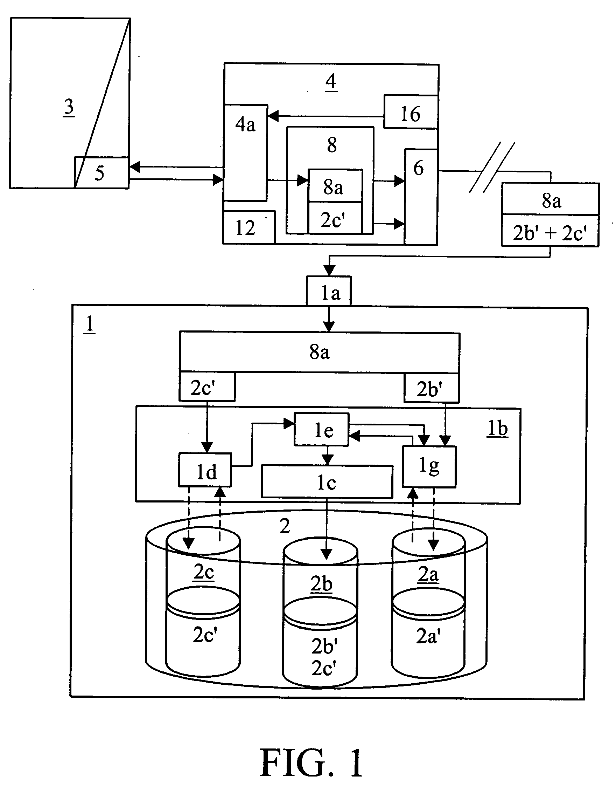

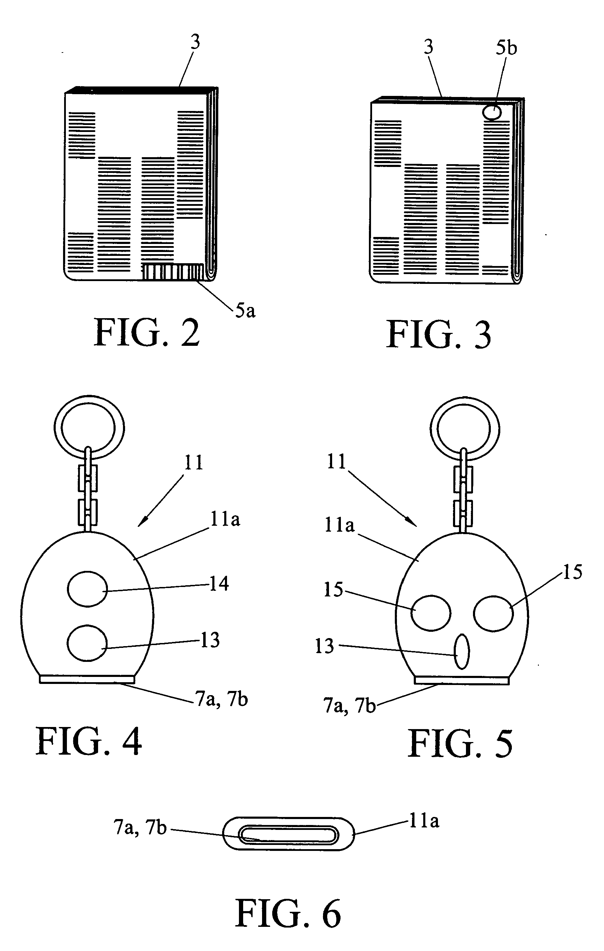

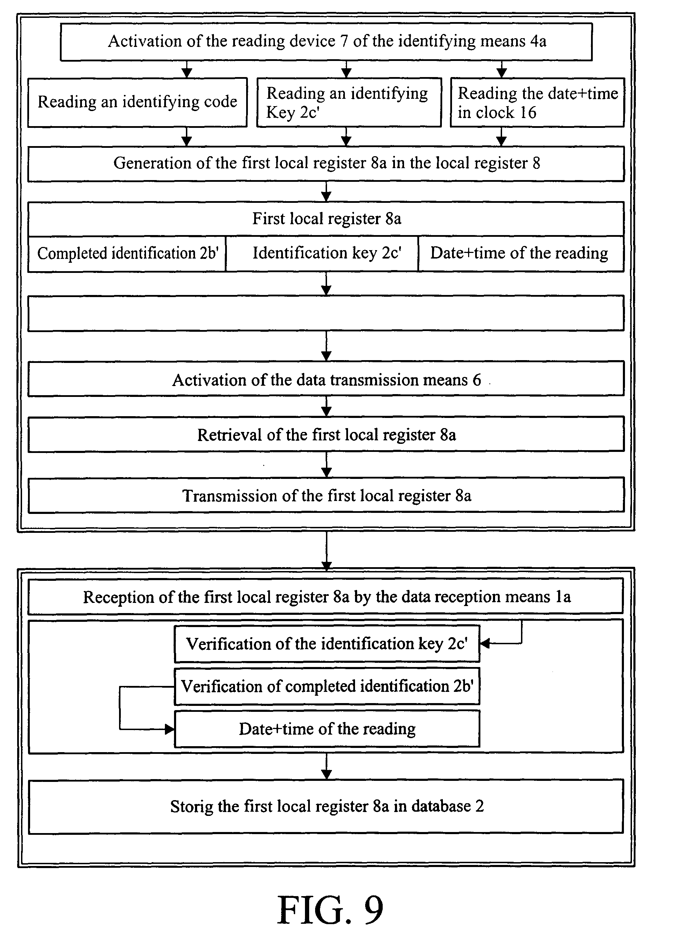

In the first embodiment as shown in Figures 1, 9 and 12, the system object of the invention comprises portable electronic units of which only one is shown for example purposes, and one central data processing unit 1. In this embodiment, each of the electronic units 4 is as those shown in Figures 1, 9 and 10 and may be embodied as one of the individual portable electronic units as shown in Figures 4, 5, and 6 that will described further in this description and that serve to identify the print media 3, such as newspapers provided of a legible electronic code 5, that may be such as newspapers respectively provided of a bar code 5a or of a radio frequency tag 5b.

As can be seen in Figure 1, the portable electronic unit 4 comprises an electric power source 12, such as a battery or a rechargeable battery, an internal clock 16, identifying means 4a to electronically identify a plurality of print media 3 and data transmission means 6 associated to the identifying means 4a to transmit the data of completed identifications 2b' to the reception means 1a of a central data processing unit 1.

The identifying means 4a comprise in turn, an electronic reader device 7 assigned to a potential reader which device 7 enables it to read the electronically legible code 5 with which the print media has been provided. This electronic reader device may be a bar code reading device 7a or a radiofrequency tag reading device 7b.

The portable unit 4 comprises also, a local register unit 8 that serves to store, at least temporally, the first local registers 8a of the data 2b' identified by the identifying means 4a, and contains also an individual admissible identification key 2c'.

The data transmission means 6 are designed to transmit, when connected to the data reception means 1a, the firs local registers 8a to the remote data processing unit 1, and may be either a transmitter, such as for instance a conventional mobile telephone transmitter type (GSM, GPRS, etc.), a conventional Bluetooth transmitter, or a conventional infrared ray transmitter, or a port that can be directly connected to a conventional external transmission unit (not shown in the figures), such as a modem, a personal computer or a land line or mobile telephone.

The central data processing unit 1, according to the first embodiment of the invention as shown in Figures 1, 9 and 12, comprises said data reception means 1a, said data processing means 1b, and a database 2 having a first file 2a that contains the admissible identification codes 2a' of the print media 3 identified by the electronically readable codes 5. The central data processing unit 1 comprises, also, a second file 2b that serves to store the data of the completed identifications 2b', received by the data reception means 1a, as well as assigning means 1c which function is to assign the data of the completed identifications 2b' to an admissible identification code 2a'. Each admissible identification code 2a' contained in the first file 2a is associated to the electronically legible code 5, 5a or 5b of a print media 3. In order to process the completed identifications, the data processing means 1b comprise the first verification means 1g to verify whether the data from completed identifications 2b' correspond to an admissible identification code 2a' as contained in the first file 2a.

The database 2 comprises, also, a key register 2c that contains an admissible admission key 2c' to for each local unit 4. To verify an identification key received by the data reception means, the data processing means 1b comprise, in addition, second verification means 1d that enable to verify in the key register 2c whether the identification received does correspond to an admissible verification key 2c'. When the verification means 1d detect an admissible verification key 2c', the first local registers 8a with the data from completed identifications 2b' received together with an admissible identification key 2c', are transmitted by the routing means 1e to the assigning means 1c.

According to what can be gathered from the combined information provided by Figures 1, 9 and 12, the first embodiment of the invention operates as follows:

Every time that the potential reader wishes to identify the electronically readable code 5 of a print media 3, the reader activates the identifying means 4a of the local unit 4, and passes the reader device 7 of the identifying means over or around the code 5 of the print media 3. When the reading device 7 is activated, it also read the date and time in the internal clock 16. The completed identification 2b' and the date and hour of the reading data are combined in the first local register 8a together with the admissible identification code 2c' of local unit 4.

To transmit a first local register 8a to the central data processing unit 1, the potential reader activates the data transmission means 6 that retrieve every local register 8a in such a manner that it is transmitted to the central data processing unit 1 where it is received via the data reception means 1a. There, the second identification means 1d check the key register 2c to verify whether the identification key 2c' contained in the first local register 8a received is an admissible identification key 2c', and if affirmative, they transmit the admissible identification key 2c' to the routing means 1e, that in turn, check with the first verification means 1g, whether the data from completed identifications 2b' correspond to an admissible identification code 2a'. In order to accomplish this, the first verification means 1g completes the appropriate verification process in the first file 2a, and if the data from completed identifications 2b' do correspond to an admissible identification code 2a', they transmit this data from completed identifications 2b' to the routing means 1e that transmit said data to the assigning means 1c that in turn assign the data of the completed identification 2b' and the date and time of completion as contained in the first local register 8a received, to the identification key 2c' and store the set comprising all this information in the second register 2b.

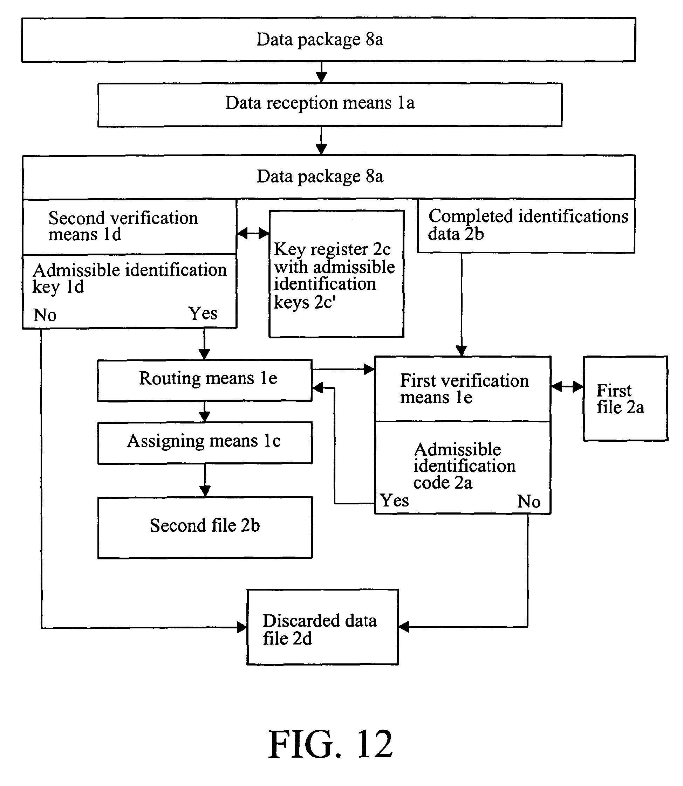

According to the information provided by Figure 12, the database 2 may also comprise a discarded data file 2d that serves to store the first registers 8a received in which no admissible identification key 2c' or admissible identification code 2a' has been detected.

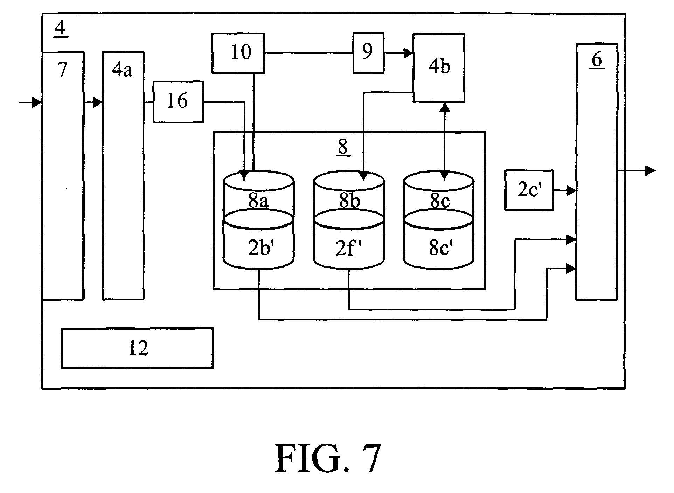

Figures 7, 8, 10 and 13 show a second embodiment of the present invention in which the potential reader may choose amongst several available actions.

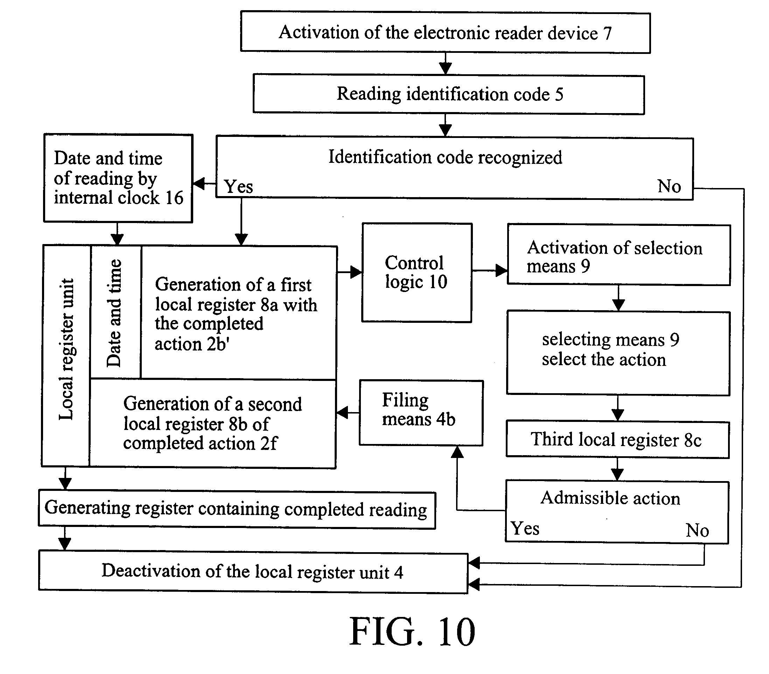

In this second embodiment of the invention - because (sic) - the local unit 4 comprises also selection means 9 associated to the identifying means 4a that can be individually operated to perform admissible actions in regards to each of the printed media 3 identified by the identifying means 4a, and filing means 4b to file the data of the completed actions 2f' in a second local register 8b. Local register unit 8 stores, at least temporally, each of the second local registers 8b containing the performed actions 2f' in regards to each printed media 3. To activate the selection means 9, the local unit 4 comprises a control logic mechanism 10 that activates the selection means 9 when the identifying means 4a have already created a first local data register 8a of a completed identification 2b' of a printed media 3. The selection means 9 are designed o enable the potential reader to select, at least, one available action in regards to the printed media 3 as identified by the identifying means 4a, and to do this, the local register unit 8 comprises, also, a third register 8c that contains a plurality of available actions 8c' that correspond to each printed media 3 as identified by the identifying means 4a. The available actions 8c' may be, for instance, a purchasing action, a reading action, a transfer or reception to or by a third person, emitting an opinion, establishing the beginning and/or end of the act of reading, and/or an act of disposal of the printed media 3 identified by the identifying means 4a. In this embodiment of the invention, the data transmission means 6 transmit, when they are connected to the data reception means 1a, the first records or local registers 8a, together with the second local registers 8b, to the remote data processing unit 1. According to what can be seen in Figure 10, activating the electronic reading device 7 causes the identification code 5 to be read. Once code 5 has been recognized there is a reading and the first local register 8a containing the date and time of the reading and the data of the completed identification 2b is generated. Control logic 10 is also activated, which in turn activated the selection means 9 in order for the potential reader may carry out an action related to the printed media 3 to which the data from completed identifications 2b' refers to. When the potential reader chooses a 2f action through the selection means 9 and when this action corresponds to an admissible or available action 8c', the completed action 2f is transmitted, in the third local register 8c, to the file means 4b, that in turn generate the second local register 8b associated to the first local register 8a. Once this association has been produced and the corresponding combined file 8a,8b has been generated, a completed reading register is generated and the local register unit 4 is deactivated until new order of the potential reader. Also, said deactivation occurs when the completed action 2f does not correspond with an admissible action 8c'.

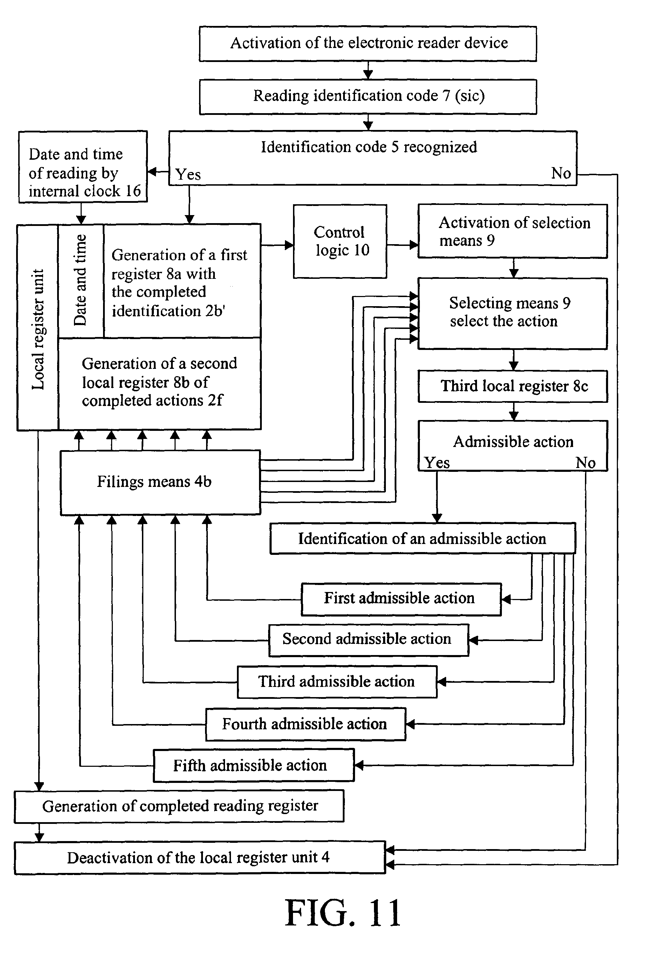

Figure 11 shows how the creation of the second local file 8b is produced when the potential reader carries out a plurality of consecutive actions. In the specific case shown in Figure 11, the potential reader carries out 5 consecutive actions that may be, for instance, the following actions:
Action 1: identifying a purchasing operation
Action 2: identifying the beginning of a reading action
Action 3: identifying the end of a reading action
Action 4: identification of the pages read
Action 5: issuing an opinion on the text read

When the potential reader chooses, by mean of the selection means 9, action 1 or the first action, said action is processed analogously to the process of completed action 2f described before in relation to Figure 10. Also, the successive actions 2^{nd} to 5^{th} are analogously processed, so the file means 4b generate successive parts of the second local register 8b with the admitted completed actions 2f and finally associate the second local register 8b to the first local register.

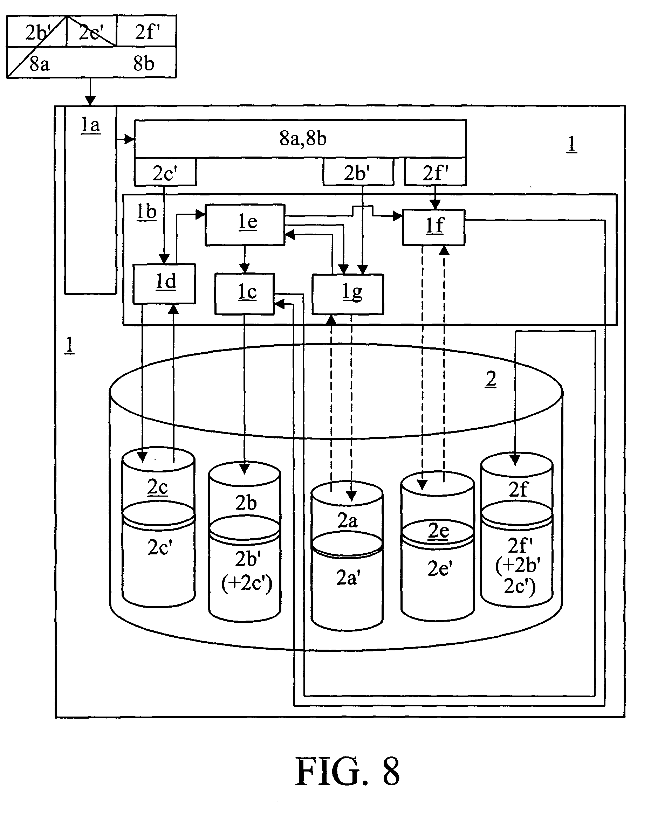

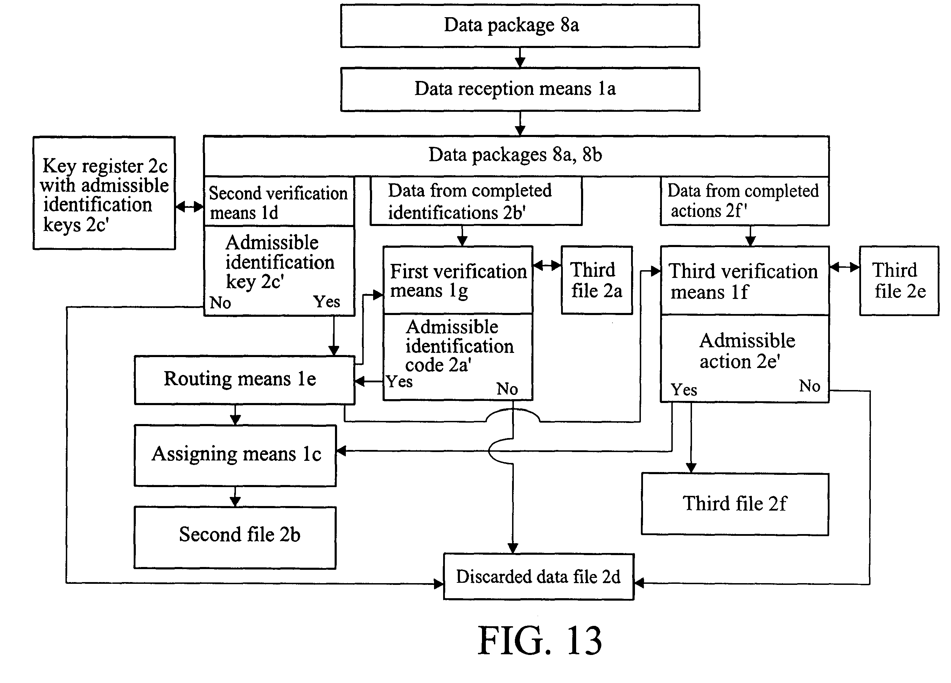

As it can be seen in Figures 8 and 13, in this embodiment, to process the second local registers 8b, the data base (2) comprises a third file 2e that contains admissible actions data 2e' that the potential reader may carry out, and a fourth file 2f that serves to store data from completed actions 2f'. To do this, the data processing means 1b comprise third verification means 1f that verify the third file 2e if the data of completed actions 2f' received by the data reception means 1a correspond to admissible actions data 2e', and that if that is the case, they transmit the completed actions data 2f' to the assigning means 1c. These assigning means 1c serve to assign the data of the completed actions 2f' to the data from completed identifications 2b', as well to assign to the admissible identification key 2c' received with said data 2f',2b', and store the data of the completed actions 2f' with the admissible identification codes 2c' in the fourth file 2f. Also, the assigning means 1c associate each admissible identification key 2c' to the data of each completed action register 2f' and to the data of each completed identification 2b'.

According, especially, to Figure 13, when the receptor means 1a of the central data processing unit receives a data package comprised by the second and first local registers 8a,8b, the second verification means 1d verify in the key register 2c, whether the identification key is an admissible identification key 2c'. When the second verification means do not recognize an admissible verification key 2c', the data package 8a,8b is sent to the discarded data file 2d, while in the case of the admissible identification key 2c' being recognized they send the identification key 2c' and the hour of the reading contained in the first local register 8a received, to the routing means 1e, from which and through the assigning means 1c, a file identified by the admissible identification key 2c' and the time and date of the reading comprised in the first local register 8a is created in the second file 2b.

At the same time, the routing means 1e order the first verification means 1g to verify in the first file 2a whether the completed identification 2b', also contained in the first local register 8a, correspond to an admissible identification code 2a'. When these first verification means 1g do not recognize an admissible verification code 2a', they send the 8a,8b data package to the discarded data file 2d, while when the first local register 8a contains an admissible verification code 2a', the first verification means send the data of the completed action 2b' to the routing means 1e, from which through the assigning means 1c, the data of the completed identification 2b' contained in the first data package 8a are stored in the second file 2b in association to the file identified by the admissible identification key 2c' previously established.

Likewise, when the first verification means 1g have detected an admissible identification code in the first local register 8a, they transmit this fact to the routing means 1e, that then command the third means of verification 1f to verify in the third file 2e whether the data of the completed actions 2f' contained in the second local register 8b, correspond to one or more admissible actions 2e'. When the third verification means 1f do not recognize the key as and admissible action key 2e' the third means of verification send the data package 8a, 8b to the discarded data file 2d, while when they do recognize and admissible action key 2e' they send the data of the corresponding completed action 2f to the assigning means 1c that add these data to the file previously generated in the second file 2b that contains the data of the first local register 8a of the data package 8a, 8b.

## Claims

1. An electronic system for compiling information on characteristics relating to the reading of print media that comprises a central data processing unit (1) that comprises data reception means (1a), data processing means (1b), a database (2) that comprises, at the least, a first file (2a) containing admissible identification codes (2a') of printed media (3) each of them identified by an electronically legible code (5) and a second file (2b) to store the data of completed identifications (2b') received by the data reception means (1a), as well as assigning means (1c) to assign the data of completed identifications (2b') to the admissible identification code (2a');
a plurality of local units (4) each provided with identifying means (4a) to electronically identify the printed media (3) based on electronically readable codes and with data transmission means (6) associated to the identifying means (4a) to transmit the completed identifications data (2b') to the data reception means (1a) of the central data processing unit (1);
**characterized in that** each admissible identification code (2a') contained in the first file (2a) is associated to the electronically legible code (5, 5a, 5b) of a printed media (3);
the data processing means (1b) comprise first verification means (1g) to verify whether the performed identification data (2b') correspond to an admissible identification code (2a') contained in the first file; and
the identifying means (4a) comprise an electronic reader device (7) to read the electronically legible code (5), individually assigned to a potential reader;
the local unit (4) also comprises a local register unit (8) in which the first local registers (8a) of the data of the performed identifications (2b') by the identifying means (4a) are stored, at least temporarily;
the data transmission means (6) transmit, when they are connected to the data reception means (1a), the first local registers (8a) to the remote data processing unit (1).

2. An electronic system according to Claim 1 **characterized in that** the electronically legible code is selected from amongst bar codes (5a) and radiofrequency tags (5b) and because the electronic reading device (7) is selected amongst bar code readers (7a) and radiofrequency tag readers (7b).

3. An electronic system according to Claims 1 or 2 **characterized in that** each local register unit (8) contains, also, an individual admissible identification key (2c'), the database (2) comprises also, a key register (2c) that contains an admissible identification key (2c') for each local unit (4), the data processing means (1b) comprise also, second verification means (1d) to verify in the key register (2c) whether an identification key received through the data reception means (1a) correspond to an admissible identification key (2c'), and routing means (1e) to transmit the first local registers (8a) together with the data of the completed identifications (2b') received together with an admissible identification key (2c'), to the assigning means (1c) when the verification means (1d) detect an admissible identification key (2c').

4. An electronic system according to Claim 3 **characterized in that** the database (2) comprises, also, a third file (2e) that contains admissible actions data (2e') the potential reader may carry out, and a fourth file (2f) to store the data of the completed actions (2f'), the data processing means (1b) comprise also third verification means (1f) that verify in the third file (2e) whether the data of the completed actions (2f') received by the data reception means (1a) correspond to admissible actions data (2e'), and if affirmative, they transmit the data of the completed actions (2f') to the assigning means (1c);
the assigning means (1c) assign the data of the completed actions (2f') to the completed identifications data (2b') and to the admissible identification key (2c') received with said data (2f', 2b'), and store the data of the completed actions (2f') with the admissible identification codes (2a') and together with said admissible identification key (2c') in the fourth file (2f);
**in that** at least one local unit (4) comprises also selecting means (9) associated to the identification means (4a) and can be individually operated to carry out admissible actions in regards to each of the printed media (3) identified by the identifying means (4a), and
file means (4b) to file the data of the completed actions (2f') in a second local register (8b);
**in that** the local register unit (8) stores, at least temporally, each of the second local registers (8b) containing the completed actions data (2f') pertaining to each printed media (3) identified;
and **in that** the data transmission means (6) transmit, when they are connected to the data reception means (1a), the first local registers (8a) and the second local registers (8b) to the remote data processing unit (1).

5. An electronic system according to Claim 4 **characterized in that** the local unit (4) comprises a control logic (10) that activates the selecting means (9) when the identifying means (4a) have created a first local register (8a) of the data from a completed identification (2b') of a printed media (3).

6. An electronic system according to Claims 4 or 5 **characterized in that**
the selection means (9) are designed to allow the potential reader to select at least one available action in regards to each printed media (3) identified by the identifying means (4a);
the local register unit (8) comprises also a third register (8c) that contains a plurality of available actions (8c') pertaining to each printed media (3) identified by the identifying means (4a).

7. An electronic system according to Claims 4, 5, or 6 **characterized in that** the third register (8c) contains data of available actions (8c') selected amongst a purchase action, a reading action, a transfer to a third party action, issuing an opinion action, establishing the beginning /end of a reading action, and/or an action of disposing of the printed media (3) identified by the identifying means (4a).

8. An electronic system according to Claims 4, 5, 6, or 7 **characterized in that** the assigning means (1c) also associate each admissible identification key (2c') to the data of each register containing completed actions (2f'), and to the data of each of the completed identifications (2b').

9. An electronic system according to any of the previous Claims **characterized in that** the local unit (4) is an individual portable electronic unit (11) having a body (11a) that serves to house the identifying means (4a), the local register unit (8) and its own power source (12), and optionally the transmission means (6).

10. A portable electronic unit for compiling information on characteristics relating to the reading of print media that comprises
Identifying means (4a) to electronically identify a plurality of printed media (3) and that comprises an electronic reading device (7) to read the electronically legible code (5) assigned to a potential reader;
data transmission means (6) associated to the identifying means to transmit data pertaining to completed identifications (2b') to the reception means (1a) of a central data processing unit (1);
a local register unit (8) to store, at least temporally, the first local registers (8a) of the performed identification data (2b') identified by the identifying means (4a); and
an electric power source (12);
**characterized in that** it also comprises selecting means (9) associated to identifying means (4a) that can be individually operated to carry out admissible actions in regards to each of the printed media (3) identified by the identifying means (4a), and filing means (4b) to file the data of the completed actions (2f') in a second local register (8b); and **in that** the local register unit (8) stores, at least temporally, each one of the second local registers (8b) containing the data of the completed actions (2f') pertaining to each printed media (3) identified;
and characterized also **in that** the data transmission means (6) transmit, when they are connected to the data receiving means (1a), the first local registers (8a) and the second local registers (8b) to the remote data processing unit (1).

11. An electronic portable unit according to Claim 10 **characterized in that** the electronic reading device (7) is selected from amongst bar code reading devices (7a) or radiofrequency tags (7b);

12. An electronic portable unit according to Claims 10 or 11 **characterized in that** the local register unit (8) contains also an individual admissible identification key (2c').

13. An electronic portable unit according to Claim 12 **characterized in that** it comprises a control logic (10) that activates the selection means (9) when the identifying means (4a) have created a first local register (8a) containing data from a completed identification (2b') of a printed media (3).

14. An electronic portable unit according to Claim 12 or 13 **characterized in that** the selection means (9) are designed to allow the potential reader to select, at least, one available action and /or an available emission (8c') in regards to each printed media (3) identified by the identifying means (4a);
the local register unit (8) comprises also a third register (8c) containing a plurality of available actions (8c') pertaining to each printed media (3) identified by the identifying means (4a).

15. A portable electronic unit according to Claim 12, 14 or 15 **characterized in that** the third register (8c) contains data pertaining to available actions (8c') selected from amongst a purchase action, a reading action, a transfer to a third party action, and/or an action of disposing of the printed media (3) identified by the identifying means (4a).

16. A portable electronic unit according to any of the Claims 10 to 15 **characterized in that** it comprises a body (11a) that houses the identifying means (4a), the transmission means (6), the local register unit (8) and the power source (12).

17. A portable unit according to any Claim from 10 to 16 **characterized in that** it comprises a turn on button (13) that can be operated by the potential reader to activate the identifying means (4a).

18. A portable unit according to any Claim from 12 to 17 **characterized in that** the selecting means (9) comprise, at the least, a multifunction selection button (14) that the potential reader can operate to select an action from amongst a plurality of available actions (8c') .

19. A portable unit according to any Claim from 10 to 17 **characterized in that** the selecting means comprise an independent selection button (15) that the potential reader can operate to select an available action (8c').

20. A portable unit according to Claim 19, **characterized in that** the independent selection button (15) is connected through the selection means (9) both to the identifying means (4a) and to the third local register (8c), in such a manner that when the independent selection button is operated it activated the identifying means (4a) and it automatically selects, at least, one of the available actions (8c').

21. A portable unit according to any of the Claims from 10 to 20, **characterized in that** the local register unit (8) comprises an internal clock (16), in such a manner that when the identifying means (4a) read an admissible identification code (2a') in a printed media, the local register unit (8a) assigns a date and a time to the data register of the completed identifications (2b') contained in the first local register (8a).

22. A portable unit according to Claim 22 **characterized in that** the local register unit (8a) also assigns a date and time from the internal clock (16) each time the identifying means (4a) are activated.
